# EUROPEAN PATENT SPECIFICATION

(11) **EP 0 752 753 B1**
(45) Date of publication and mention of the grant of the patent: **13.09.2000**
(21) Application number: 96303683.5
(22) Date of filing: 23.05.1996
(51) Int. Cl.: H02P 7/74, H02P 7/05

(54) **Power circuit for reluctance machines**
Leistungsschaltkreis für Reluktanzmaschine
Circuit d'alimentation pour machine à reluctance

(30) Priority: 07.07.1995 GB 9513914
(43) Date of publication of application: 08.01.1997
(73) Proprietor: SWITCHED RELUCTANCE DRIVES LIMITED, Harrogate, North Yorkshire HG3 1PR (GB)
(72) Inventor: Webster, Paul Donald, Headingley, Leeds, LS6 3DT (GB)
(74) Representative: Hale, Peter

(56) References cited:
- EP-A- 0 493 848
- DE-A- 4 105 162
- DE-A- 4 306 307
- FR-A- 2 252 684
- US-A- 4 602 195
- US-A- 5 237 494
- CONFERENCE RECORD OF THE INDUSTRY APPLICATIONS SOCIETY ANNUAL MEETING. (IAS), SAN DIEGO, OCT. 1 - 5, 1989, vol. PART 1, 1 October 1989, INSTITUTE OF ELECTRICAL AND ELECTRONICS ENGINEERS, pages 561-567, XP000091617 KRISHNAN R ET AL: "ANALYSIS AND DESIGN OF A LOW COST CONVERTER FORSWITCHED RELUCTANCE MOTOR DRIVES"

## Description

This invention relates to power circuits for reluctance machines. The invention is particularly applicable to a power circuit for switched reluctance drives.

Switched reluctance (SR) drives drawing power from an alternating current (ac) source of voltage, require a rectifier circuit, eg. a single phase or three phase bridge circuit comprising, for example, four or six diodes to create an intermediate direct voltage source. The direct output voltage from the bridge rectifier is smoothed by a dc link capacitor assembly across which the SR power converter, supplying the SR machine, is connected. The SR power converter includes, for example, active power semi-conductor switches, which sequentially connect and disconnect the intermediate voltage source, smoothed by the dc link capacitor, to the SR machine winding(s), and diodes through which winding currents, still present when the active switches are turned off, are returned to the dc link capacitor.

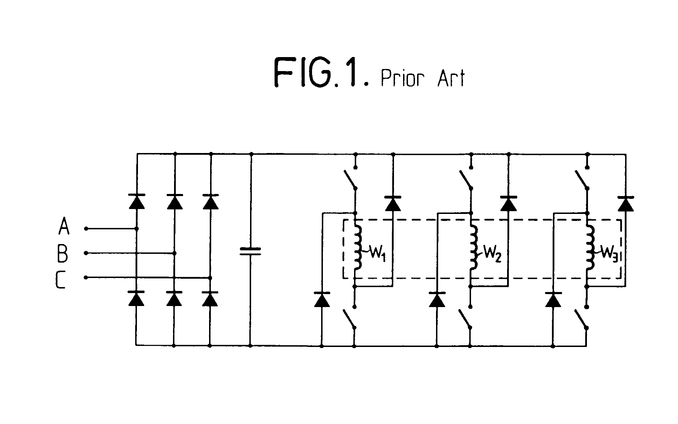

A typical prior art circuit is illustrated in Figure 1 of the drawings. The phase windings of the 3-phase SR machine are denoted by W₁, W₂, W₃. When the SR machine is operating as a motor, power flows from the ac source voltage, via the rectifier and SR power converter, to the SR machine. If, however, the SR machine is required to produce a braking torque, ie. to generate, power flows from the SR machine via the SR converter to the dc link capacitor. Since the diode rectifier does not permit current to be returned to the ac source of voltage, the generated power charges the dc link capacitor to a higher voltage, placing additional voltage stresses on the power conversion system. Only a limited amount of regenerated energy can be stored safely in the dc link capacitor.

If an SR drive is required to operate in the generating mode to an extent where the regenerated energy is greater than can safely be stored in the dc link capacitor, a known means of absorbing the regenerated power is to dissipate it in a dynamic braking resistor connected in parallel with the dc link capacitor by a semi-conductor power switch. The switch is activated only when the dc link voltage exceeds a threshold value approximately equal to the peak value of the ac voltage source. While this is a relatively simple technique to implement, all the energy dissipated in the braking resistor is lost. This is inefficient.

Another known means of absorbing the regenerated power is to interpose a thyristor bridge inverter circuit, including one or more inductors connected between its dc terminals and those of the dc link capacitor, with its ac terminals connected either directly or via a transformer to the ac voltage source. A transformer represents a cost and weight disadvantage, but if no transformer is used, problems can arise associated with currents circulating between the terminals of the ac voltage source via one or more of the diodes of the rectifier and one or more thyristors of the inverter.

According to the prior art, it has been necessary to provide separate rectification arrangements for each machine being driven. Similarly, a separate dc link capacitor has been used for each machine.

In the field of ac induction motors it is known to run a plurality of machines using a common inverter. However it is well known in the art of switched reluctance machines that this is not possible because each SR machine has its own switching timing requirements, locked to the speed of rotation of each individual rotor.

Nevertheless, DE-A-4 105 162 discloses a power circuit for brushless motor according to the preamble of claim 1.

It is an object of the present invention to provide common power circuit elements for a plurality of independently controllable reluctance machines, thereby realising reductions in components, and thus in the cost and weight of such a power circuit, and improvements in efficiency.

The system and method of the present invention is defined in the accompanying independent claims 1 and 6. Some preferred features of the system are recited in the dependent claims.

Preferably, a single dc link capacitor is connected across the dc output of the rectifier. This still further reduces the component count of the power circuit by providing a single dc link capacitor common to all switching circuits connected across the dc output of the rectifier. Thus, the invention allows the use of only one rectifier and, preferably, one dc link capacitor for a group of reluctance machines. It will be appreciated by the person of ordinary skill that a set of capacitors connected in series or parallel could be used in place of a single capacitor. This may be necessary to achieve the correct voltage rating for a particular application. The word 'capacitor' is intended to embrace such serial or parallel sets of capacitors unless the context otherwise dictates.

Furthermore, the invention has the advantage of allowing the power generated by one or more machine(s) working in a generating mode to be delivered to one or more other machines, connected to the same single rectifier, drawing power in a motoring mode. The energy delivered back to the dc link by one or more other reluctance machines connected with the power circuit is distributable between the other machine(s) through their independent power switching circuits, thereby using more efficiently the total power drawn at the ac input to the rectifier. This is based on the inventor's recognition of the fact that the motoring and generating modes of a reluctance machine can be exploited using conventional components in a new and advantageous way while still reducing the component count of the power circuit as a whole.

Preferably, the rectifier is an assembly of diode rectifiers, for example a diode bridge rectifier.

The invention can be put into practice in various ways some of which will now be described by way of example with reference to the accompanying drawings in which :
Figure 1 is a circuit diagram of a known power circuit for a switched reluctance machine;
Figure 2 is a circuit diagram of a power circuit according to the invention; and
Figure 3 is a schematic diagram of a switched reluctance drive system incorporating a further embodiment of a power circuit according to the invention.

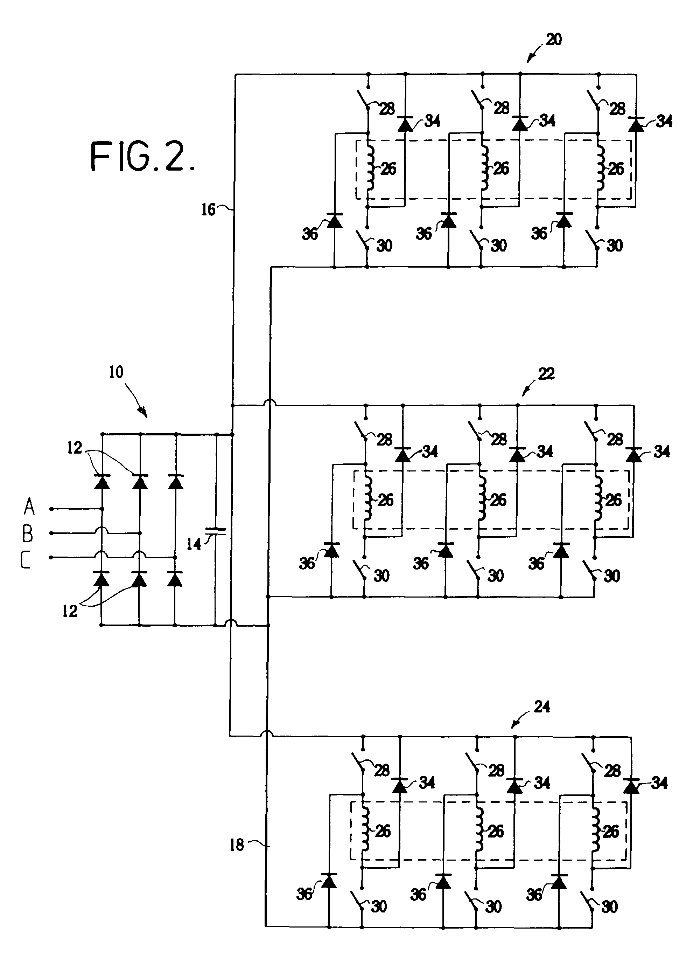

Referring to Figure 2 of the drawings, a power circuit according to the present invention comprises a rectifier assembly 10 for each of three alternating current (ac) input phases on lines A, B, C. The rectifier assembly 10 comprises pairs of serially connected diodes 12 arranged to conduct in the same direction for each input phase. The pairs of diodes are connected together in parallel. Each of the input lines A,B,C is respectively connected between the corresponding pair of diodes 12. A dc link capacitor assembly 14 is connected in parallel with the pairs of diodes 12. Although a single capacitor is shown for convenience, in practice this is often implemented by capacitors connected in series or parallel to give the ratings and characteristics required by the designer for a particular application. The dc link capacitor 14 smooths the rectified ac output of the rectifier 10 to provide a substantially constant output voltage between upper and lower power lines 16 and 18.

In Figure 2 three separately controllable switched reluctance machines 20;22;24 notionally represented by their phase windings 26 are connected with the smooth rectified output of the rectifier 10 across the dc link capacitor 14. As in Figure 1, each machine shown in Figure 2 is a three phase machine comprising a winding 26 for each phase. First and second semiconductor switches 28;30 are connected to each end of the winding 26 as part of a power switching circuit. The switches 28;30 connect the winding between the upper and lower power rails 16 and 18 and control the energy delivered to and extracted from the machine. A first recirculating diode 34 is connected to conduct from between the winding 26 and the second switch 30 to the upper power rail 16. A second recirculating diode 36 is connected to conduct from the lower power rail 18 to between the winding 26 and the first switch 28.

It will be seen in Figure 2 that each machine is similarly connected, having a switch and diode arrangement as described above for each phase winding of each machine. While three machines are illustrated in Figure 2, the skilled person will appreciate that any other number of switched reluctance machines can be connected to such a rectifier and dc link capacitor, each with its own switching arrangement. The limit is dependent on the power handling capabilities of the rectifier 10 and the rating of the dc link capacitor 14.

According to the invention, the rectifier has a smoothed dc output between the upper and lower power rails 16 and 18 which is switched across the windings according to switched reluctance machine control techniques that are known in the art.

The invention has the further benefit of being able to transfer power between machines. For example, if the first and third machines 20 and 24 are motoring, ie. drawing power from the power rails 16 and 18, and the second machine 22 is generating, ie. delivering energy to the said power rails, it will be seen that the energy delivered by the machine 22 is usefully available to the first and third machines 20 and 24 rather than being dissipated in a resistor, as known in the prior art.

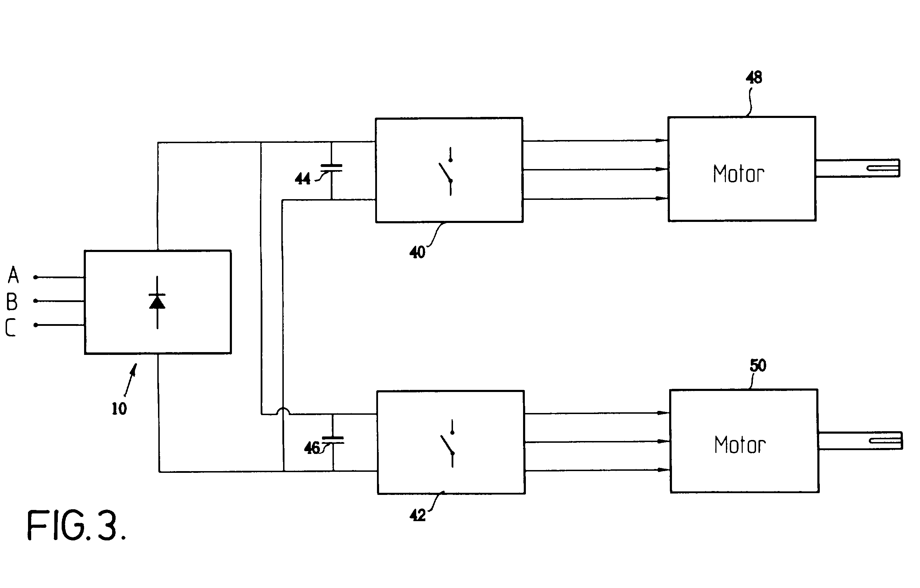

Figure 3 illustrates a switched reluctance drive system in which a power circuit according to the invention is connected to a pair of switched reluctance machines. For the sake of convenience the rectifier 10 in Figure 3 is depicted schematically but can be the same as that illustrated in Figure 2. The output of the rectifier 10 is connected to the upper and lower power rails of a pair of power switching circuits 40 and 42 as in Figure 2. However, in this embodiment separate dc link capacitors 44 and 46 are connected individually across the power rails of each respective power circuit 40 and 42. The three phase outputs of each power switching circuit are connected across the phase windings of switched reluctance machines 48 and 50, each having a stator and a rotor, in conventional manner. As in the previous embodiment, the single rectifier is able to supply power to both of the power switching circuits 40 and 42. The rectifier output is smoothed by the separate capacitors 44 and 46. In the event that one of the machines is in a generating mode, the energy delivered by it to the power circuit is available to charge both capacitors. Thus, the ability to charge one of the dc link capacitors for use by another machine is also usefully exploited in this embodiment of the invention.

It will be apparent that the power capabilities of the power switching circuits have to be able to handle the power requirements of the reluctance machines to which they are connected. On the other hand, the rectifier used should be designed to cope with delivering sufficient power to all the connected machines. The dc link capacitor used may be individual to a particular machine and, therefore, should have a power handling capability in accordance with known reluctance machine power circuit design. However, in the case of the common dc link capacitor of the embodiment such as that in Figure 2, the power handling requirements of that capacitor have to take into account the increased burden of supplying power to, and absorbing power from, all the machines connected with the power circuit of the invention.

The invention may also be used to provide a common supply from a rectified ac source and also to arrange for one or more of the machines to be arranged to run as an auxiliary or stand-by generator for use in the event of ac supply failure.

Although the invention has been described in terms of rotary machines, the skilled person will be aware that the same principles of operation can be applied to a linear reluctance motor to equal effect. The moving member of a linear motor is referred to in the art as a rotor. The term 'rotor' used herein is intended to embrace the moving member of linear motor as well.

The principles of the invention which have been disclosed by way of the above examples can be implemented using various circuit types and arrangements. The rectifier may be a different form from that shown in Figures 2 and 3, for example a single-phase or a half-wave, either controlled or uncontrolled rectifier all as known in the art. Similarly, the switching circuits may be designed according to other known design techniques to equal effect. Many different types of switching devices can be used, such as thyristors, gate turn-off thyristors, power transistors, MOSFETs or other switching devices. Those skilled in the art will readily recognise that these and other modifications and changes may be made to the present invention without strictly following the exemplary applications illustrated and described herein and without departing from the scope of the present invention which is set forth in the following claims.

## Claims

1. An electrical machine drive system comprising a plurality of electrical machines (20,22,24), each having a stator and a rotor, a power circuit including a voltage rectifier (10) having an alternating current (ac) input and a direct current (dc) output, and a plurality of independently actuatable switching circuits (28,30,34,36) connected to the dc output of the rectifier, each switching circuit being arranged to control the energy in the or each phase of a respective one of the electrical machines, characterised in that:
a) the electrical machines are switched reluctance machines (20,22,24); and in that
b) at least one of the machines is arranged to run as a standby generator actuatable to supply power to the other machine or machines in the event of a power failure at the rectifier.

2. A circuit as claimed in claim 1 in which a single smoothing capacitor is connected across the dc output of the rectifier.

3. A circuit as claimed in claim 1 in which a smoothing capacitor is connected across each switching circuit.

4. A circuit as claimed in any of claims 1, 2 and 3 in which the rectifier is a diode rectifier.

5. A circuit as claimed in any of claims 1, 2, 3 and 4 in which the switching circuit comprises one or more semi-conductor switches.

6. A method of operating a plurality of switched reluctance machines, each machine comprising a stator and a rotor, a power circuit including a voltage rectifier having an alternating current (ac) input and a direct current (dc) output, and a plurality of independently actuatable switching circuits connected to the dc output of the rectifier; each switching circuit being arranged to control a respective one of the switched reluctance machines, the method comprising:
running one or more of the machines in a power generating mode to supply electrical power; and
running one or more of the remaining machines in a motoring mode, taking electrical power supplied by the machines running in the power generating mode.

## Patentansprüche

1. Elektrisches Maschinenantriebssystem, umfassend eine Mehrzahl von elektrischen Maschinen(20, 22, 24), von denen jede einen Stator und einen Rotor besitzt, eine Stromversorgungsschaltung mit einem Spannungsgleichrichter (10), welcher einen Wechselstrom-(AC)-Eingnng und einen Gleichstrom-(DC)-Ausgang aufweist, sowie eine Mehrzahl von unabhängig voneinander betätigbaren Schaltkreisen (28, 30, 34, 36), welche mit dem DC-Ausgang des Gleichrichters verbunden sind, wobei jeder Schaltkreis so gestaltet ist, daß er die Energie in der oder jeder Phase einer jeweiligen der elektrischen Maschinen steuert, dadurch gekennzeichnet, daß
a) die elektrischen Maschinen geschaltete Reluktanzmaschinen (20, 22, 24) sind; und daß
b) mindestens eine der Maschinen so gestaltet ist, daß sie als Reservegenerator betrieben werden kann, um im Falle eines Stromausfalles am Gleichrichter Energie zu der anderen Maschine oder zu den anderen Maschinen zuzuführen.

2. Schaltung nach Anspruch 1, in welcher ein einzelner Glättkondensator parallel zum DC-Ausgang des Gleichrichters geschaltet ist.

3. Schaltung nach Anspruch 1, in welcher ein Glättkondensator parallel zu jedem Schaltkreis geschaltet ist.

4. Schaltung nach einem oder mehreren der Ansprüche 1, 2 und 3, in welcher der Gleichrichter ein Diodengleichrichter ist.

5. Schaltung nach einem oder mehreren der Ansprüche 1, 2, 3 und 4, in welcher der Schaltkreis einen oder mehrere Halbleiter-Schalter umfaßt.

6. Verfahren zum Betrieb einer Mehrzahl von geschalteten Reluktanzmaschinen, wobei jede Maschine einen Stator und einen Rotor, eine Stromversorgungsschaltung mit einem Spannungsgleichrichter, welcher einen Wechsekstrom-(AC)-Eingang und einen Gleichstrom-(DC)-Ausgang aufweist, und eine Mehrzahl von unabhängig voneinander betätigbaren Schaltkreisen, welche mit dem DC-Ausgang des Gleichrichters verbunden sind, umfaßt; und jeder Schaltkreis so gestaltet ist, daß er jeweils eine der geschalteten Reluktanzmaschinen steuert, wobei das Verfahren umfaßt:
Betreiben von einer oder von mehreren der Maschinen im Energieerzeugungsmodus, um elektrische Energie zu erzeugen; und
Betreiben von einer oder von mehreren der übrigen Maschinen im Motor-Modus welche die von den Maschinen, die im Energieorzeugungsmodus betrieben werden, erzeugte elektrische Energie aufnehmen.

## Revendications

1. Système d'entraînement de machines électriques, comprenant une pluralité de machines électriques (20, 22, 24), chacune ayant un stator et un rotor, un circuit d'alimentation comprenant un redresseur de tension (10) ayant une entrée de courant alternatif (ca) et une sortie de courant continu (cc), et une pluralité de circuits de commutation (28, 30, 34, 36) qui peuvent être commandés indépendamment et qui sont connectés à la sortie cc du redresseur, chaque circuit de commutation étant agencé pour commander l'énergie de la phase ou de chaque phase d'une machine respective des machines électriques, caractérisé en ce que :
a) les machines électriques sont des machines à réluctance commutée (20, 22, 24), et en ce que
b) au moins l'une des machines est aménagée pour tourner en générateur de réserve qui peut être commandé pour délivrer de l'énergie à l'autre ou aux autres machines dans le cas d'une défaillance en énergie au niveau du redresseur.

2. Circuit selon la revendication 1, dans lequel un seul condensateur d'égalisation est connecté aux bornes de la sortie cc du redresseur.

3. Circuit selon la revendication 1, dans lequel un condensateur d'égalisation est connecté aux bornes de chaque circuit de commutation.

4. Circuit selon l'une quelconque des revendications 1, 2 et 3, dans lequel le redresseur est un redresseur à diodes.

5. Circuit selon l'une quelconque des revendications 1, 2, 3 et 4, dans lequel le circuit de commutation comprend un ou plusieurs commutateurs à semi-conducteurs.

6. Procédé pour faire fonctionner une pluralité de machines à réluctance commutée, chaque machine comprenant un stator et un rotor, un circuit d'alimentation comprenant un redresseur de tension ayant une entrée de courant alternatif (ca) et une sortie de courant continu (cc), et une pluralité de circuits de commutation qui peuvent être commandés indépendamment et qui sont connectés à la sortie cc du redresseur, chaque circuit de commutation étant agencé pour commander une machine respective des machines à réluctance commutée, le procédé comprenant les étapes consistant :
à faire tourner une ou plusieurs des machines en mode générateur d'énergie pour délivrer une alimentation électrique, et
à faire tourner une ou plusieurs des machines restantes en mode moteur, tirant de l'énergie électrique délivrée par les machines tournant en mode générateur d'énergie.
